(19)

**Europäisches Patentamt**
**European Patent Office**
**Office européen des brevets**

(11) **EP 4 350 805 B1**

(12) **EUROPEAN PATENT SPECIFICATION**

(45) Date of publication and mention
of the grant of the patent:
**25.06.2025   Bulletin 2025/26**

(21) Application number: **23193527.1**

(22) Date of filing: **25.08.2023**

(51) International Patent Classification (IPC):
$H01M\ 4/131^{(2010.01)}$     $H01M\ 4/36^{(2006.01)}$
$H01M\ 4/525^{(2010.01)}$     $H01M\ 4/62^{(2006.01)}$
$H01M\ 4/02^{(2006.01)}$

(52) Cooperative Patent Classification (CPC):
**H01M 4/131; H01M 4/364; H01M 4/505;**
**H01M 4/525; H01M 4/625; H01M 10/052;**
H01M 2004/021; H01M 2004/028; Y02E 60/10

(54) **CATHODE FOR LITHIUM SECONDARY BATTERY AND LITHIUM SECONDARY BATTERY INCLUDING THE SAME**

KATHODE FÜR LITHIUMSEKUNDÄRBATTERIE UND LITHIUMSEKUNDÄRBATTERIE DAMIT

CATHODE POUR BATTERIE SECONDAIRE AU LITHIUM ET BATTERIE SECONDAIRE AU LITHIUM LA COMPRENANT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **15.09.2022   KR 20220116418**

(43) Date of publication of application:
**10.04.2024   Bulletin 2024/15**

(73) Proprietors:
• **SK Innovation Co., Ltd.**
  **Seoul 03188 (KR)**
• **SK On Co., Ltd.**
  **Seoul 03161 (KR)**

(72) Inventors:
• **LEE, Yong Seok**
  **34124 Daejeon (KR)**
• **JEUN, Jeong Hoon**
  **34124 Daejeon (KR)**
• **KIM, Jae Ram**
  **34124 Daejeon (KR)**
• **MIN, Jae Yun**
  **34124 Daejeon (KR)**
• **EOM, Ki Joo**
  **34124 Daejeon (KR)**
• **LEE, Myung Ro**
  **34124 Daejeon (KR)**
• **JANG, Hyun Joong**
  **34124 Daejeon (KR)**
• **CHOI, Je Nam**
  **34124 Daejeon (KR)**

(74) Representative: **Prüfer & Partner mbB**
**Patentanwälte · Rechtsanwälte**
**Sohnckestraße 12**
**81479 München (DE)**

(56) References cited:
**CN-A- 104 852 041     US-A1- 2015 188 135**

EP 4 350 805 B1

**Description**

BACKGROUND

1. Field

The present invention relates to a cathode for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc.

A lithium secondary battery has been used due to its high operational voltage and energy density per unit weight, a high charging rate, a compact dimension, etc.

A lithium secondary battery typically includes an electrode assembly including a cathode, an anode and a separation layer (separator), and an electrolyte immersing the electrode assembly.

The cathode may include a cathode current collector and a cathode active material layer formed on the cathode current collector. The cathode active material layer may include a lithium metal oxide as a cathode active material.

Cathode active materials have included lithium cobalt oxide ($LiCoO_2$), lithium nickel oxide ($LiNiO_2$), lithium manganese oxide ($LiMnO_2$, $LiMn_2O_4$, etc.), a lithium iron phosphate compound ($LiFePO_4$), an NCM-based lithium metal oxide containing nickel, cobalt and manganese, an NCA-based lithium metal oxides containing nickel, cobalt and aluminum.

SUMMARY

According to one aspect of the present invention, there is provided a cathode for a lithium secondary battery having improved operational reliability and electrochemical stability.

According to another aspect of the present invention, there is provided a lithium secondary battery having improved operational reliability and electrochemical stability.

A cathode for a lithium secondary battery includes a cathode current collector, and a cathode active material layer formed on the cathode current collector. The cathode active material layer includes cathode active material particles and satisfies Equation 1. The cathode active material particles include lithium metal oxide particles containing nickel and having a mole fraction of cobalt of 0.02 or less among all elements except lithium and oxygen.

$$[\text{Equation 1}]$$

$$Ca/Cn \leq 6.44 \ \mu m^2$$

In Equation 1, Cn is a total number of contact surfaces between the cathode active material particles in the cathode active material layer, and Ca is a total area of the contact surfaces in a 3D model showing a distribution of the cathode active material particles.

In some embodiments, Ca/Cn may be in a range from 4.5 $\mu m^2$ to 6.44 $\mu m^2$.

In some embodiments, the lithium metal oxide particles contain nickel and manganese, and do not contain cobalt.

In some embodiments, a mole fraction of nickel in the lithium metal oxide particles may be in a range from 0.7 to 0.85 among all elements except lithium and oxygen.

In some embodiments, the lithium metal oxide particles comprise first lithium metal oxide particles each having a shape of a secondary particle in which a plurality of primary particles are aggregated, and second lithium metal oxide particles each having a shape of a single particle.

In some embodiments, a ratio of a content of the second lithium metal oxide particles relative to a content of the first lithium metal oxide particles in the cathode active material layer may be in a range from 1/3 to 3.

In some embodiments, the lithium metal oxide particles may include first lithium metal oxide particles, and second lithium metal oxide particles having a smaller particle diameter ($D_{50}$) than that of the first lithium metal oxide particles.

In some embodiments, the first lithium metal oxide particles may have a particle diameter ($D_{50}$) from 9 $\mu m$ to 18 $\mu m$, and the second lithium metal oxide particles may have a particle diameter ($D_{50}$) from 2 $\mu m$ to 7 $\mu m$.

In some embodiments, the cathode active material layer may further include a conductive material, and a content of the lithium metal oxide particles may be in a range from 80 wt% to 99 wt% based on a total weight of the cathode active material layer.

In some embodiments, the conductive material may include a sphere-type conductive material having an aspect ratio from 0.5 to 1.5, and a needle-type conductive material having an aspect ratio of 2 or more.

In some embodiments, a particle diameter ($D_{50}$) of the sphere-type conductive material may be in a range from 10 nm to 60 nm, and a length of the needle-type conductive material is in a range from 15 $\mu$m to 65 $\mu$m.

In some embodiments, a ratio of a content of the sphere-type conductive material relative to a content of the needle-type conductive material in the cathode active material layer may be in a range from 0.6 to 0.8.

In some embodiments, a ratio of a content of the sphere-type conductive material relative to a content of the needle-type conductive material in the cathode active material layer may be in a range from 1.8 to 3.5.

In some embodiments, a density of the cathode active material layer may be in a range from 3.4 g/cc to 3.7 g/cc.

A lithium secondary battery includes the cathode for a lithium secondary battery according to the above-described embodiments, and an anode facing the cathode.

According to various embodiments of the present invention, a cathode for a lithium secondary battery employing lithium metal oxide particles containing a low content of cobalt and/or lithium metal oxide particles devoid of cobalt as a cathode active material may be provided. The cathode may satisfy Equation 1 to have a low bulk resistance even when the lithium metal oxide particles are used.

BRIEF DESCRIPTION OF THE DRAWINGS

FIG. 1 is a schematic cross-sectional view illustrating a cathode for a lithium secondary battery in accordance with various embodiments.

FIGS. 2 and 3 are a schematic plan view and a schematic cross-sectional view, respectively, illustrating a lithium secondary battery in accordance with various embodiments.

DETAILED DESCRIPTION OF THE EMBODIMENTS

As noted above, lithium metal oxide particles containing only a small amount of cobalt on a surface of the particles have been used as a cathode active material. For example, Korean Published Patent Application No. 10-2020-0085679 describes a lithium secondary battery having improved life-span properties by employing lithium metal oxide particles containing only a small amount of cobalt on a surface of the particles.

However, if the lithium metal oxide does not contain cobalt, a crystal structure may become unstable, thereby degrading operational reliability and electrochemical stability of the lithium secondary battery. Yet, the price of cobalt is relatively high compared to those of other metals such as nickel and manganese. The present invention addresses this need to avoid using lithium metal oxide particles containing a high concentration of cobalt and avoid its relatively high cobalt cost.

According to various embodiments of the present invention, a cathode for a lithium secondary battery including a lithium metal oxide particle is provided. According to other embodiments of the present invention, a lithium secondary battery including the cathode is also provided.

Cathode for Lithium Secondary Battery

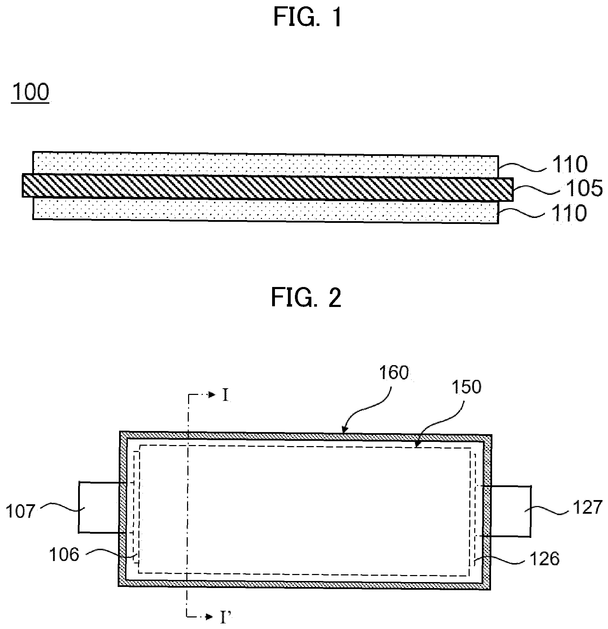

FIG. 1 is a schematic cross-sectional view illustrating a cathode for a lithium secondary battery in accordance with various embodiments.

Referring to FIG. 1, a cathode 100 for a lithium secondary battery includes a cathode current collector 105 and a cathode active material layer 110 formed on the cathode current collector 105 .

For example, the cathode active material layer 110 may be formed on one surface, or may be formed on both surfaces of the cathode current collector 105 as shown in FIG. 1.

In one example, the cathode current collector 105 may include stainless steel, nickel, aluminum, titanium, copper, or an alloy thereof.

The cathode active material layer 110 may include a cathode active material particle capable of reversibly intercalating and de-intercalating lithium ions. The cathode active material layer 110 may include a plurality of the cathode active material particles.

In various embodiments, the cathode active material particles include lithium metal oxide particles having a mole fraction of cobalt (Co) of 0.02 or less among all elements other than lithium (Li) and oxygen (O).

In one embodiment, the mole fraction of Co in the lithium metal oxide particles may be 0.015 or less, preferably 0.01 or less.

In another embodiment, the lithium metal oxide particles may substantially not contain Co. For example, Co may not be detected when components of the lithium metal oxide particle are analyzed by a inductively coupled plasma (ICP) analysis.

In various embodiments, the lithium metal oxide particle may contain nickel (Ni). In one embodiment, the lithium metal oxide particle may contain Ni and manganese (Mn).

In some embodiments, a mole fraction of Ni in the lithium metal oxide particle may be in a range from 0.6 to 0.9, from 0.65 to 0.85, or from 0.7 to 0.85 among all elements except Li and O.

In some embodiments, a mole fraction of Mn in the lithium metal oxide particle may be in a range from 0.05 to 0.3, from 0.1 to 0.3, or from 0.15 to 0.3 of all elements except Li and O.

In exemplary embodiments, the lithium metal oxide particle may include a crystalline structure or chemical structure represented by Chemical Formula 1 below.

[Chemical Formula 1] $\qquad$ $Li_aNi_xMn_yCo_zM_{1-x-y-z}O_2$

In Chemical Formula 1, M may include at least one of Mg, V, Ti, Al, Fe, Ru, Zr, W, Sn, Nb, Mo, Cu, Zn, Cr, Ga, V and Bi. In Chemical Formula 1, $0.9 \leq a \leq 1.2$, $0.6 \leq x \leq 0.9$, $0 \leq z \leq 0.02$, and $0.8 \leq x+y+z \leq 1$.

In some embodiments, $0.9 \leq a < 1.1$.

In some embodiments, $0.65 \leq x \leq 0.85$ or $0.7 \leq x \leq 0.85$.

In some embodiments, $z \leq 0.015$ or $z \leq 0.01$.

In some embodiments, $z > 0$, or $z \geq 0.001$.

In some embodiments, $z = 0$.

The lithium metal oxide particles may contain a small amount of Co or may not contain Co, so that a production cost may be lowered. However, the lithium metal oxide particle may have relatively low electrical conductivity and thermal stability of the crystal structure. Accordingly, the cathode and the secondary battery employing the lithium metal oxide particle may provide relatively high resistance and low power.

However, the cathode active material layer 110 according to various embodiments of the present invention satisfy Equation 1 below to resolve the issues that may be caused by the reduced amount of Co.

$$[\text{Equation 1}]$$

$$Ca/Cn \leq 6.44 \mu m^2$$

In Equation 1, Cn is a total number of contact surfaces between the cathode active material particles in a 3D model showing a distribution of the cathode active material particles in the cathode active material layer, and Ca is a total area of the contact surfaces. Ca/Cn may indicate a size of an average contact area per one contact surface.

In exemplary embodiments, the 3D model of the anode may be obtained using an XRM. Cn and Ca values can be automatically calculated by analyzing the 3D model using Geodict S/W (see Evaluation Example 1).

Under the condition of Equation 1, even though the lithium metal oxide particle is employed, the lithium secondary battery has shown improved (e.g., lowered) resistance properties.

In the case of not satisfying the conditions of Equation 1, the resistance of the cathode may be excessively increased. Further, when the lithium secondary battery is operated at a high temperature, a direct current internal resistance (DCIR) of the lithium secondary battery may be excessively increased.

When using a lithium metal oxide particle (e.g., NCM 811) having a Co mole fraction exceeding 0.02 (based on all elements except Li and O), effects or improvements from satisfying the condition of Equation 1 have been found to be insignificant. Accordingly, in one embodiment, the lithium metal oxide particle may be substantially free of Co meaning that Co is not intentionally added and that only trace Co amounts from the source materials are present.

In some embodiments, Ca/Cn may be 3 $\mu m^2$ or more, 4 $\mu m^2$ or more, 4.5 $\mu m^2$ or more, 5 $\mu m^2$ or more, or 5.2 $\mu m^2$ or more. In this case, power and rapid charging properties of the lithium secondary battery can be improved.

For example, the Ca/Cn value may be determined by various factors such as a particle size and a content of the cathode active material particles in the cathode active material layer 100; morphology of the cathode active material particles; a mixing ratio between a plurality of cathode active material particles (when the cathode active material particles are a blend of the plurality of cathode active material particles having different physical properties); morphology and content of a conductive material; a mixing ratio of a plurality of conductive materials (when the conductive material is a blend of the plurality of conductive materials having different physical properties); a density of the cathode active material layer 100, etc.

In some embodiments, the lithium metal oxide particle may further contain a doping element. For example, the doping element may include Al, Ti, Ba, Zr, Si, B, Mg, P, Sr, W, La, etc.

In one embodiment, the cathode active material may further include a coating layer formed on at least a portion of a surface of the lithium metal oxide particle. For example, the coating layer may contain Al, Ti, Ba, Zr, Si, B, Mg, P, Sr, W, La, etc.

In some embodiments, the lithium metal oxide particles may include first lithium metal oxide particles and second lithium metal oxide particles, with the second lithium metal oxide particles having a particle diameter ($D_{50}$) smaller than that of the first lithium metal oxide particles.

The particle diameter ($D_{50}$) is a particle diameter at 50 volume percent (vol%) of a volumetric cumulative particle diameter distribution. The particle diameter ($D_{50}$) can be measured using a laser diffraction method.

In some embodiments, the particle diameter ($D_{50}$) of the first lithium metal oxide particles may be in a range from 9 $\mu$m to 18 $\mu$m, or from 10 $\mu$m to 18 $\mu$m. In some embodiments, the particle diameter ($D_{50}$) of the second lithium metal oxide particles may be in a range from 1 to 9 $\mu$m, or from 2 to 7 $\mu$m.

In some embodiments, a ratio of a content of the second lithium metal oxide particles relative to a content of the first lithium metal oxide particle based on a total weight of the cathode active material layer 110 may be in a range from 1/4 to 4, preferably from 1/3 to 3.

In some embodiments, the lithium metal oxide particle may include a first lithium metal oxide particle having a shape of a secondary particle in which a plurality of primary particles are aggregated, and a second lithium metal oxide particle having a shape of a single particle.

The single particle and the secondary particle can be distinguished based on a cross-sectional image of the particles measured by a scanning electron microscope (SEM).

The secondary particle may refer to a particle that is considered or observed as one particle by aggregation of a plurality of the primary particles. Boundaries of the primary particles can be viewed in the SEM cross-sectional image of the secondary particle.

For example, more than 10, 30 or more, 50 or more, or 100 or more primary particles may be aggregated in the secondary particle. For example, in the SEM cross-sectional image, when the above-mentioned number of the primary particles are aggregated to form, e.g., a substantially circular outer boundary of a particle, the particle can be determined as the secondary particle.

In one embodiment, the single particle may refer to a monolith rather than an aggregate. For example, boundaries of the primary particles may not be recognized in the SEM cross-sectional image in the single particle, which may distinguish the above-mentioned shape of the secondary particle.

In one embodiment, fine particles (e.g., particles having a volume of 1/100 or less of a volume of the single particle) may be attached to a surface of the single particle, and the above shape may not be excluded from the shape of the single particle.

In one embodiment, the single particles may exist in contact with each other. For example, 2 to 10, 2 to 5, or 2 to 3 single particles may exist in contact with each other.

In one embodiment, a density of the cathode active material layer 110 may be in a range from 2.5 g/cc to 3.7 g/cc, from 2.8 g/cc to 3.7 g/cc, from 3.0 g/cc to 3.7 g/cc, from 3.2 g/cc to 3.7 g/cc, or from 3.4 to 3.7 g/cc. The density of the cathode active material layer 110 can be calculated using a weight of the cathode from which a weight of the cathode current collector is subtracted and a volume of the cathode active material layer that can be calculated using measured length, width and thickness of the cathode active material layer.

The cathode active material layer 110 may further include a conductive material. The cathode active material layer 110 may further include a binder.

In some embodiments, a content of the cathode active material particles may be in a range from 80 weight percent (wt%) to 99 wt%, from 85 wt% to 98 wt%, or from 90 wt% to 95 wt% based on a total weight of the cathode active material layer 110.

In some embodiments, a content of the lithium metal oxide particles may be in a range from 80 wt% to 99 wt%, 85 wt% to 98 wt%, or 90 wt% to 95 wt% based on a total weight of the cathode active material layer 110.

In some embodiments, a content of the conductive material may be in a range from 1 wt% to 10 wt%, from 1 wt% to 5 wt%, or from 1 wt% to 3 wt% based on a total weight of the cathode active material layer 110.

In some embodiments, a content of the binder may be in a range from 1 wt% to 10 wt%, from 1 wt% to 5 wt%, or from 1 wt% to 3 wt% based on a total weight of the cathode active material layer 110.

In one embodiment, the conductive material may include a needle-type conductive material. For example, the needle-type conductive material may include a rod-shaped conductive material, a fiber-shaped conductive material, etc.

In some embodiments, an aspect ratio (length/diameter) of the needle-type conductive material may be in a range from 2 to 10,000, from 10 to 5,000, from 50 to 3,000, or from 100 to 1,000.

The aspect ratio is measured as a ratio of a length of a major axis relative to a length of a minor axis. The length of the major axis is determined as the largest length of an imaginary cross-sectional line of a particle passing through a center of the particle. The length of the minor axis is determined as the smallest length of an imaginary cross-sectional line of the particle extending through the center of the particle.

In some embodiments, the needle-type conductive material may include a carbon nanotube (CNT).

For example, the carbon nanotube (CNT) may include a single-walled CNT (SWCNT), a double-walled CNTs (DWCNT), a multi-walled carbon nanotube (MWCNT), a rope-type CNT, etc.

In some embodiments, a length of the needle-type conductive material may be in a range from 15 $\mu$m to 65 $\mu$m. For example, the length of the needle-type conductive material can be measured as an average length of the predetermined number (e.g., 10 to 100) of the conductive materials included in an SEM image.

In some embodiments, the conductive material may further include a sphere-type conductive material. In this case, the needle-type conductive material may form a conductive network in a wide range, and the sphere-type conductive material may additionally form a conductive network in a narrow range. Accordingly, the reduction of the electrical conductivity due to the use of the lithium metal oxide particle may be reduced or prevented.

If the sphere-type conductive material is combined with the lithium metal oxide particle (e.g., NCM 811) having a Co mole fraction exceeding 0.02 (based on all elements except Li and O) to satisfy Equation 1, rapid charging properties of the lithium secondary battery may be degraded.

In some embodiments, an aspect ratio (length/diameter) of the sphere-type conductive material may be in a range from 0.5 to 1.5.

In some embodiments, a sphericity of the sphere-type conductive material (i.e., the ratio of the surface area of a sphere to the surface area of the sphere-type conductive material) may be in a range from 0.7 to 1, from 0.8 to 1, or from 0.9 to 1.

In some embodiments, a particle diameter ($D_{50}$) of the sphere-type conductive material may be in a range from 10 nm to 60 nm. The particle diameter ($D_{50}$) the sphere-type conductive material can be measured using a laser diffraction method.

For example, the sphere-type conductive material may include a carbon-based conductive material such as graphite, carbon black, graphene, etc.; and a metal-based conductive material such as tin, tin oxide, titanium oxide, LaSrCoO3, $LaSrMnO_3$, etc.

In some embodiments, a ratio of the content of the sphere-type conductive material to a content of the needle-type conductive material in a total weight of the cathode active material layer 110 may be in a range from 0.6 to 0.9, or from 0.6 to 0.8.

In some embodiments, a ratio of the content of the sphere-type conductive material to the content of the needle-type conductive material in the total weight of the cathode active material layer 110 may be in a range from 1.5 to 4, from 1.8 to 3.5, or from 2 to 3.

In one embodiment, the binder may include a fluorine-based polymer binder. In some embodiments, the fluorine-based polymer binder may include polyvinylidene fluoride (PVDF), vinylidene fluoride-hexafluoro propylene copolymer (PVDF-co-HFP), etc.

Lithium Secondary Battery

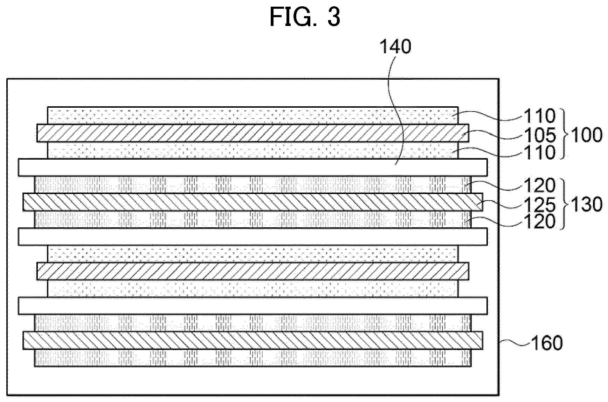

FIGS. 2 and 3 are a schematic plan view and a schematic cross-sectional view, respectively, illustrating a lithium secondary battery in accordance with various embodiments.

An anode 130 may include an anode current collector 125 and an anode active material layer 120 formed on the anode current collector 125. For example, the anode active material layer 120 may be formed on one surface or both surfaces of the anode current collector 125.

The anode active material layer 120 may include an anode active material capable of reversibly intercalating and de-intercalating lithium ions.

In one embodiment, the anode active material layer 120 may further include a binder, a conductive material, etc.

For example, the anode current collector 125 may include gold, stainless steel, nickel, aluminum, titanium, copper, or an alloy thereof.

In one embodiment, the anode active material may include a lithium alloy, a carbon-based active material, a silicon-based active material, etc.

For example, the lithium alloy may further include aluminum, zinc, bismuth, cadmium, antimony, silicon, lead, tin, gallium, indium, etc.

For example, the carbon-based active material may include a crystalline carbon, an amorphous carbon, a carbon composite, a carbon fiber, etc.

For example, the amorphous carbon may include, e.g., a hard carbon, coke, a mesocarbon microbead (MCMB), a mesophase pitch-based carbon fiber (MPCF), etc.

For example, the crystalline carbon may include, e.g., artificial graphite, natural graphite, graphitized coke, graphitized MCMB, graphitized MPCF, etc.

In another embodiment, the anode active material may include the silicon-based active material. The silicon-based active material may include, e.g., Si, $SiO_x$ (0<x<2), Si/C, SiO/C, Si-metal, etc. In this case, the capacity of the lithium secondary battery can increase.

In some embodiments, an area of the anode 130 may be greater than that of the cathode 100. Accordingly, lithium ions generated from the cathode 100 can be transferred to the anode 130 without necessarily being precipitated.

In one example, the cathode 100 and the anode 130 may be alternately and repeatedly disposed to form an electrode assembly 150.

A separation layer 140 may be interposed between the cathode 100 and the anode 130. For example, the electrode assembly 150 may be formed by winding, stacking or zigzag folding (z-folding) of the separation layer 140.

In one embodiment, the separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a non-woven fabric formed from a glass fiber with a high melting point, a polyethylene terephthalate fiber, etc.

The lithium secondary battery according to various embodiments may include a cathode lead 107 connected to the cathode 100 to protrude to an outside of a case 160, and an anode lead 127 connected to the anode 130 to protrude to the outside of the case 160.

In one example, the cathode lead 107 may be electrically connected to the cathode current collector 105. The anode lead 130 may be electrically connected to the anode current collector 125.

For example, the cathode current collector 105 may include a cathode tab 106 at one side thereof. The cathode active material layer 110 may not be formed on the cathode tab 106. The cathode tab 106 may be integral with the cathode current collector 105 or may be connected to the cathode current collector 105 by, e.g., welding. The cathode current collector 105 and the cathode lead 107 may be electrically connected via the cathode tab 106.

The anode current collector 125 may include an anode tab 126 at one side thereof. The anode active material layer 120 may not be formed on the anode tab 126. The anode tab 126 may be integral with the anode current collector 125 or may be connected to the anode current collector 125 by, e.g., welding. The anode electrode current collector 125 and the anode lead 127 may be electrically connected via the anode tab 126.

In one embodiment, the electrode assembly 150 may be accommodated together with an electrolyte in the case 160 to define the lithium secondary battery.

The lithium secondary battery may be manufactured in, e.g., a cylindrical shape using a can, a square shape, a pouch shape or a coin shape.

In another embodiment, the electrolyte may include a lithium salt and an organic solvent.

The lithium salt may be represented by $Li^+X^-$, and an anion of the lithium salt $X^-$ may include any one of, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

For example, the organic solvent may include a carbonate-based solvent such as ethylene carbonate (EC), propylene carbonate (PC), dimethyl carbonate (DMC), diethyl carbonate (DEC), ethyl methyl carbonate (EMC), etc.; an ester-based solvent such as methyl propionate, ethyl propionate, ethyl acetate, propyl acetate, butyl acetate, butyrolactone, caprolactone, valerolactone, etc.; an ether-based solvent such as dibutyl ether, tetraethylene glycol dimethyl ether (TEGDME), diethylene glycol dimethyl ether (DEGDME), tetrahydrofuran (THF), etc.; an alcohol-based solvent such as ethyl alcohol, isopropyl alcohol, etc.; a ketone-based solvent such as cyclohexanone; an amide-based solvent (e.g., dimethylformamide), a dioxolane-based solvent (e.g., 1,3-dioxolane), a sulfolane-based solvent, an aprotic solvent such as a nitrile-based solvent, etc.

Preparation Example 1 (preparation of Co 0 mol% secondary particle)

A mixed solution was prepared by adding $NiSO_4$ and $MnSO_4$ by a molar ratio of 75:25 to distilled water from which dissolved oxygen was removed.

The mixed solution, NaOH and $NH_4OH$ were put into a reactor, and coprecipitation was performed for 55 hours to prepare metal hydroxide particles ($Ni_{0.75}Mn_{0.25}(OH)_2$).

The metal hydroxide particles and lithium hydroxide were put into a dry highspeed mixer so that the molar ratio became 1:1.03 to form a mixture.

The mixture was put into a furnace, and a temperature of the furnace was raised to 780 °C at a temperature ramp rate of 2°C/min, and maintained at 780°C for 13 hours. During the firing of the furnace, oxygen gas was passed through the furnace at a flow rate of 10 mL/min.

Thereafter, the fired product was cooled to room temperature, and then pulverized and classified to obtain lithium metal oxide particles ($LiNi_{0.75}Mn_{0.25}O_2$).

A cross-section of the lithium metal oxide particle was observed with a scanning electron microscope (SEM), and it was confirmed that the primary particles were aggregated to form secondary particles.

A particle diameter ($D_{50}$) of the lithium metal oxide particles was measured using a laser diffraction method. The

measured particle diameter ($D_{50}$) of the lithium metal oxide particles was 13 $\mu$m.

Preparation Example 2 (preparation of Co 0 mol% single particle)

A mixed solution was prepared by adding $NiSO_4$ and $MnSO_4$ by a molar ratio of 75:25 to distilled water from which dissolved oxygen was removed.

The mixed solution, NaOH and $NH_4OH$ were put into a reactor and coprecipitation was performed for 60 hours to prepare metal hydroxide particles $Ni_{0.75}Mn_{0.25}(OH)_2$.

The metal hydroxide particles and lithium hydroxide were put into a dry highspeed mixer so that the molar ratio became 1:1.03 to form a mixture.

The mixture was put into a furnace, a temperature of the furnace was raised to 950°C at a temperature ramp rate of 2°C/min, and the mixture was fired at 950°C for 10 hours. During the firing of the furnace, oxygen gas was passed through the furnace at a flow rate of 10 mL/min.

Thereafter, the fired product was cooled to room temperature, and then pulverized and classified to obtain lithium metal oxide particles ($LiNi_{0.75}Mn_{0.25}O_2$).

A cross-section of the lithium metal oxide particles was observed with a scanning electron microscope (SEM), and it was confirmed that the particles had a single particle shape.

The particle diameter ($D_{50}$) of the lithium metal oxide particles was measured using a laser diffraction method. The measured particle diameter ($D_{50}$) of the lithium metal oxide particles was 3.5 $\mu$m.

Preparation Example 3 (preparation of Co 2 mol% secondary particle)

A mixed solution was prepared by adding $NiSO_4$, $CoSO_4$ and $MnSO_4$ at a molar ratio of 75:2:23 to distilled water from which dissolved oxygen was removed.

Lithium metal oxide particles ($LiNi_{0.75}Co_{0.02}Mn_{0.23}O_2$) were prepared by the same method as that in Preparation Example 1, except that the-above mixed solution was used.

A cross-section of the lithium metal oxide particles was observed with a scanning electron microscope (SEM), and it was confirmed that the primary particles were aggregated to form secondary particles.

The particle diameter ($D_{50}$) of the lithium metal oxide particles was measured using a laser diffraction method. The measured particle diameter ($D_{50}$) of the lithium metal oxide particles was 13 $\mu$m.

Preparation Example 4 (preparation of Co 2 mol% single particle)

A mixed solution was prepared by adding $NiSO_4$, $CoSO_4$ and $MnSO_4$ by a molar ratio of 75:2:23 to distilled water from which dissolved oxygen was removed.

Lithium metal oxide particles ($LiNi_{0.75}Co_{0.02}Mn_{0.23}O_2$) were prepared by the same method as that in Preparation Example 2, except that the above mixed solution was used.

A cross-section of the lithium metal oxide particles were observed with a scanning electron microscope (SEM), and it was confirmed that the particles had a single particle shape.

The particle diameter ($D_{50}$) of the lithium metal oxide particles was measured using a laser diffraction method. The particle diameter ($D_{50}$) of the lithium metal oxide particles was 3.4 $\mu$m.

Examples and Comparative Examples

The cathode active materials listed in Table 1, PVDF, and the conductive materials listed in Table 1 below were dispersed in N-methyl pyrrolidone (NMP) to prepare a cathode slurry.

Based on a total 100 wt% of the cathode active material, 1.2 wt% of PVDF, the conductive material with the content of Table 1, and a remainder of the cathode active material were used.

The cathode slurry was coated on an aluminum foil having a thickness of 15 $\mu$m, dried and pressed to prepare a cathode having a cathode active material layer formed thereon. The pressing was performed so that a density of the cathode active material layer was adjusted to about 3.5 g/cc.

A lithium metal was used as a counter electrode (anode).

The cathode and the anode were each notched in a circular shape, and a circular polyethylene separator having a thickness of 13 $\mu$m was interposed between the cathode and the anode to prepare an electrode assembly.

The electrode assembly and an 1M $LiPF_6$ solution, with solvent: EC/EMC 3:7 v/v, were put into a coin-type case to prepare a coin-type lithium secondary battery.

Evaluation Example 1: Analysis of contact state of cathode active material particles in the cathode active material layer

(1) Specimens were prepared by cutting the cathodes of Examples and Comparative Examples into a size of 100 mm×100 mm.
(2) A 3D model (3D modeling only evaluating the cathode active material particles) showing a distribution of the particles of the cathode active material in the specimen was produced. Specifically, images of the cathode specimen were obtained using an XRM while rotating the cathode specimen, and the images were merged to obtain the 3D model.
(3) The 3D model was analyzed to calculate the total number of contact surfaces (Cn) and the total area of the contact surfaces (Ca, i.e., the sum of the areas of the contact surfaces) formed by the cathode active material particles contacting each other. Specifically, the 3D model was analyzed using a 3D image analysis software, Geodict S/W, to measure the number of contact pixels of the cathode active material particles and obtain contact areas of the contact pixels).
(4) An average contact area per a contact surface was calculated by dividing Ca by Cn.

The 3D modeling and analysis were performed with the following equipment and conditions.

1) Measuring equipment: an X-ray microscope (Zeiss, 620 versa)
2) Measurement conditions: X-ray source condition 50 kV / 4.5 W; Voxel size (spatial resolution) 300 nm
3) Analysis program: Geodict S/W (a commercial software program from Math2Market), Identify Grain
4) Analysis conditions: setting an interface threshold of grain-fragment reconnection to 22%; set to include grains in domain boundary; grain shape was set to Ellipsoid type.

Experimental Example 2: Measurement of cathode bulk resistance

A bulk resistance of the cathode was measured using the following measurement equipment and conditions.

1) Measurement equipment: Hioki XF057 Probe unit

2) Measurement conditions: Current 1 uA; voltage range 10V

3) Number of Pin contacts: 500

Evaluation Example 3: Evaluation of resistance (DCIR) increase ratio after high temperature cycle

The lithium secondary batteries of Examples and Comparative Examples were charged at 45°C at 0.33C in constant current mode (CC) and constant voltage mode(CV) (or, 4.2V 0.05C CUT-OFF) and then discharged at 0.33C CC until reaching a state of charge (SOC) 50%.
The batteries were discharged and supplementary-charged by 1C C-rate at the SOC 50% for 10 seconds to measure DCIR R1. Specifically, in the discharge and supplementary-charge, an end point of the voltage was set in an equation of a straight line, and a slope was adopted as the DCIR value.
The lithium secondary battery was repeatedly charged and discharged 300 times at 45 °C according to the charging and discharging conditions noted above. After charging and discharging 300 times, a DCIR R2 was measured by the same method as that described above.
A resistance (DCIR) increase ratio was calculated by the following equation.

$$\text{DCIR increase ratio (\%)} = (R2-R1)/R1 \times 100$$

The results are shown in Table 1.

[Table 1]

| No. | composition of cathode active material | composition of conductive material | Ca/Cn ($\mu m^2$) | cathode Bulk resistance ($\Omega cm$) | DCIR increase ratio (45°C, 300 cycles) (%) |
|---|---|---|---|---|---|
| Example 1 | A-1 + A-2 75:25 (w/w) | B-1(0.4wt%) B-2(0.8wt%) | 6.44 | 4.42 | 7 |
| Example 2 | A-1 + A-2 75:25 (w/w) | B-1(0.4wt%) B-2(1.2wt%) | 5.26 | 3.88 | 6 |
| Example 3 | A-1 + A-2 75:25 (w/w) | B-1(0.6wt%) B-2(0.4wt%) | 6.04 | 2.7 | 6.5 |
| Example 4 | A-3 + A-4 75:25 (w/w) | B-1(0.4wt%) B-2(0.8wt%) | 6.4 | 4.4 | 6 |
| Comparative Example 1 | A-1 + A-2 75:25 (w/w) | B-1(0.6wt%) | 6.5 | 9 | 50 |
| Comparative Example 2 | A-1 + A-2 90: 10 (w/w) | B-1(0.6wt%) | 11.78 | 6.6 | 26 |
| Comparative Example 3 | A-1 + A-2 75:25 (w/w) | B-1(0.4wt%) B-2(0.4wt%) | 8.12 | 6.02 | 10 |
| Comparative Example 4 | A-5 + A-6 75:25 (w/w) | B-1(0.4wt%) B-2(0.8wt%) | 6.4 | 4.1 | 30 |
| Comparative Example 5 | A-5 + A-6 75:25 (w/w) | B-1(0.4wt%) B-2(0.4wt%) | 7.5 | 4.0 | 30 |
| A-1: Preparation Example 1<br>A-2: Preparation Example 2<br>A-3: Preparation Example 3<br>A-4: Preparation Example 4<br>A-5: NCM 811($LiNi_{0.8}Co_{0.1}Mn_{0.1}O_2$), secondary particle , particle diameter ($D_{50}$): 13 $\mu m$<br>A-6: NCM 811($LiNi_{0.8}Co_{0.1}Mn_{0.1}O_2$), single particle, particle diameter ($D_{50}$): 3.8 $\mu m$<br>B-1: MWCNT, length : 40 $\mu m$<br>B-2: carbon black, sphericity>0.8, $D_{50}$: 35 nm | | | | | |

Referring to Table 1, the lithium secondary batteries of the Examples provided cathode bulk resistances and high-temperature resistance increase ratios which both were lower than those from the lithium secondary batteries of the Comparative Examples.

## Claims

1. A cathode for a lithium secondary battery, comprising:

a cathode current collector; and
a cathode active material layer formed on the cathode current collector, the cathode active material layer comprising cathode active material particles and satisfying Equation 1,
wherein the cathode active material particles comprise lithium metal oxide particles containing nickel and having a mole fraction of cobalt of 0.02 or less among all elements except lithium and oxygen:

[Equation 1]

$$Ca/Cn \leq 6.44 \ \mu m^2$$

wherein, in Equation 1, Cn is a total number of contact surfaces between the cathode active material particles in the cathode active material layer, and Ca is a total area of the contact surfaces as measured with a 3D model of a distribution of the cathode active material particles.

2. The cathode for a lithium secondary battery according to claim 1, wherein Ca/Cn is in a range from 4.5 $\mu m^2$ to 6.44 $\mu m^2$.

3. The cathode for a lithium secondary battery according to any one of claims 1 and 2, wherein the lithium metal oxide particles contain nickel and manganese, and contain no cobalt.

4. The cathode for a lithium secondary battery according to any one of claims 1 to 3, wherein a mole fraction of nickel in the lithium metal oxide particles is in a range from 0.7 to 0.85 among all elements except lithium and oxygen.

5. The cathode for a lithium secondary battery according to any one of claims 1 to 4, wherein the lithium metal oxide particles comprise:

   first lithium metal oxide particles each having a shape of a secondary particle in which a plurality of primary particles are aggregated; and
   second lithium metal oxide particles each having a shape of a single particle.

6. The cathode for a lithium secondary battery according to claim 5, wherein a ratio of a content of the second lithium metal oxide particles relative to a content of the first lithium metal oxide particles in the cathode active material layer is in a range from 1/3 to 3.

7. The cathode for a lithium secondary battery according to any one of claims 1 to 6, wherein the lithium metal oxide particles comprise:

   first lithium metal oxide particles; and
   second lithium metal oxide particles having a smaller particle diameter ($D_{50}$) than that of the first lithium metal oxide particles.

8. The cathode for a lithium secondary battery according to any one of claims 5 to 7, wherein the first lithium metal oxide particles have a particle diameter ($D_{50}$) from 9 $\mu m$ to 18 $\mu m$, and the second lithium metal oxide particles have a particle diameter ($D_{50}$) from 2 $\mu m$ to 7 $\mu m$.

9. The cathode for a lithium secondary battery according to any one of claims 1 to 8, wherein the cathode active material layer further comprises a conductive material, and
   a content of the lithium metal oxide particles is in a range from 80 wt% to 99 wt% based on a total weight of the cathode active material layer including the conductive material.

10. The cathode for a lithium secondary battery according to claim 9, wherein the conductive material comprises:

    a sphere-type conductive material having an aspect ratio from 0.5 to 1.5; and
    a needle-type conductive material having an aspect ratio of 2 or more.

11. The cathode for a lithium secondary battery according to claim 10, wherein a particle diameter ($D_{50}$) of the sphere-type conductive material is in a range from 10 nm to 60 nm, and
    a length of the needle-type conductive material is in a range from 15 $\mu m$ to 65 $\mu m$.

12. The cathode for a lithium secondary battery according to any one of claims 10 and 11, wherein a ratio of a content of the sphere-type conductive material relative to a content of the needle-type conductive material in the cathode active material layer is in a range from 0.6 to 0.8.

13. The cathode for a lithium secondary battery according to any one of claims 10 and 11, wherein a ratio of a content of the sphere-type conductive material relative to a content of the needle-type conductive material in the cathode active material layer is in a range from 1.8 to 3.5.

14. The cathode for a lithium secondary battery according to any one of claims 1 to 13, wherein a density of the cathode active material layer is in a range from 3.4 g/cc to 3.7 g/cc.

**15.** A lithium secondary battery, comprising:

   the cathode for a lithium secondary battery of any one of claims 1 to 14; and
   an anode facing the cathode.

**Patentansprüche**

**1.** Kathode für eine Lithium-Sekundärbatterie, umfassend:

   einen Kathodenstromabnehmer; und
   eine Kathodenaktivmaterialschicht, die auf dem Kathodenstromabnehmer gebildet ist, wobei die Kathodenaktivmaterialschicht Kathodenaktivmaterialteilchen umfasst und Gleichung 1 erfüllt,
   wobei die Kathodenaktivmaterialteilchen Lithiummetalloxidteilchen umfassen, die Nickel enthalten und einen Molanteil von Kobalt von 0,02 oder weniger unter allen Elementen außer Lithium und Sauerstoff aufweisen:

$$[\text{Gleichung 1}]$$

$$Ca/Cn \leq 6{,}44\ \mu m^2$$

   wobei in Gleichung 1 Cn eine Gesamtzahl von Kontaktflächen zwischen den Kathodenaktivmaterialteilchen in der Kathodenaktivmaterialschicht ist, und Ca eine Gesamtfläche der Kontaktflächen ist, gemessen mit einem 3D-Modell einer Verteilung der Kathodenaktivmaterialteilchen.

**2.** Kathode für eine Lithium-Sekundärbatterie gemäß Anspruch 1, wobei Ca/Cn in einem Bereich von 4,5 $\mu m^2$ bis 6,44 $\mu m^2$ liegt.

**3.** Kathode für eine Lithium-Sekundärbatterie gemäß einem der Ansprüche 1 und 2, wobei die Lithiummetalloxidteilchen Nickel und Mangan enthalten und kein Kobalt enthalten.

**4.** Kathode für eine Lithium-Sekundärbatterie gemäß einem der Ansprüche 1 bis 3, wobei ein Molanteil von Nickel in den Lithiummetalloxidteilchen in einem Bereich von 0,7 bis 0,85 unter allen Elementen außer Lithium und Sauerstoff liegt.

**5.** Kathode für eine Lithium-Sekundärbatterie gemäß einem der Ansprüche 1 bis 4, wobei die Lithiummetalloxidteilchen umfassen:

   erste Lithiummetalloxidteilchen, die jeweils eine Form eines Sekundärteilchens aufweisen, in dem eine Vielzahl von Primärteilchen aggregiert sind; und
   zweite Lithiummetalloxidteilchen, die jeweils eine Form eines Einzelteilchens aufweisen.

**6.** Kathode für eine Lithium-Sekundärbatterie gemäß Anspruch 5, wobei ein Verhältnis eines Gehalts der zweiten Lithiummetalloxidteilchen relativ zu einem Gehalt der ersten Lithiummetalloxidteilchen in der Kathodenaktivmaterialschicht in einem Bereich von 1/3 bis 3 liegt.

**7.** Kathode für eine Lithium-Sekundärbatterie gemäß einem der Ansprüche 1 bis 6, wobei die Lithiummetalloxidteilchen umfassen:

   erste Lithiummetalloxidteilchen; und
   zweite Lithiummetalloxidteilchen mit einem kleineren Teilchendurchmesser ($D_{50}$) als der der ersten Lithiummetalloxidteilchen.

**8.** Kathode für eine Lithium-Sekundärbatterie gemäß einem der Ansprüche 5 bis 7, wobei die ersten Lithiummetalloxidteilchen einen Teilchendurchmesser ($D_{50}$) von 9 $\mu m$ bis 18 $\mu m$ aufweisen und die zweiten Lithiummetalloxidteilchen einen Teilchendurchmesser ($D_{50}$) von 2 $\mu m$ bis 7 $\mu m$ aufweisen.

**9.** Kathode für eine Lithium-Sekundärbatterie gemäß einem der Ansprüche 1 bis 8, wobei die Kathodenaktivmaterialschicht ferner ein leitfähiges Material umfasst, und
   ein Gehalt der Lithiummetalloxidteilchen in einem Bereich von 80 Gew.-% bis 99 Gew.-% liegt, bezogen auf ein Gesamtgewicht der Kathodenaktivmaterialschicht, die das leitfähige Material enthält.

10. Kathode für eine Lithium-Sekundärbatterie gemäß Anspruch 9, wobei das leitfähige Material umfasst:

ein leitfähiges Material vom Kugeltyp mit einem Aspektverhältnis von 0,5 bis 1,5; und
ein leitfähiges Material vom Nadeltyp mit einem Aspektverhältnis von 2 oder mehr.

11. Kathode für eine Lithium-Sekundärbatterie gemäß Anspruch 10, wobei ein Teilchendurchmesser ($D_{50}$) des leitfähigen Materials vom Kugeltyp in einem Bereich von 10 nm bis 60 nm liegt, und
eine Länge des leitfähigen Materials vom Nadeltyp in einem Bereich von 15 $\mu$m bis 65 $\mu$m liegt.

12. Kathode für eine Lithium-Sekundärbatterie gemäß einem der Ansprüche 10 und 11, wobei ein Verhältnis eines Gehalts des leitfähigen Materials vom Kugeltyp relativ zu einem Gehalt des leitfähigen Materials vom Nadeltyp in der Kathodenaktivmaterialschicht in einem Bereich von 0,6 bis 0,8 liegt.

13. Kathode für eine Lithium-Sekundärbatterie gemäß einem der Ansprüche 10 und 11, wobei ein Verhältnis eines Gehalts des leitfähigen Materials vom Kugeltyp relativ zu einem Gehalt des leitfähigen Materials vom Nadeltyp in der Kathodenaktivmaterialschicht in einem Bereich von 1,8 bis 3,5 liegt.

14. Kathode für eine Lithium-Sekundärbatterie gemäß einem der Ansprüche 1 bis 13, wobei eine Dichte der Kathodenaktivmaterialschicht in einem Bereich von 3,4 g/cc bis 3,7 g/cc liegt.

15. Lithium-Sekundärbatterie, umfassend:

die Kathode für eine Lithium-Sekundärbatterie gemäß einem der Ansprüche 1 bis 14; und
eine Anode, die der Kathode zugewandt ist.

**Revendications**

1. Cathode pour une batterie secondaire au lithium, comprenant :

un collecteur de courant de cathode ; et
une couche de matériau actif de cathode formée sur le collecteur de courant de cathode, la couche de matériau actif de cathode comprenant des particules de matériau actif de cathode et satisfaisant l'équation 1,
où les particules de matériau actif de cathode comprennent des particules d'oxyde métallique de lithium contenant du nickel et ayant un rapport molaire de cobalt de 0,02 ou moins parmi tous les éléments autres que le lithium et l'oxygène :

$$[\text{Équation 1}]$$

$$Ca/Cn \leq 6,44 \ \mu m^2$$

où, dans l'équation 1, Cn est un nombre total de surfaces de contact entre les particules de matériau actif de cathode dans la couche de matériau actif de cathode, et Ca est une surface totale des surfaces de contact mesurée avec un modèle 3D d'une distribution des particules de matériau actif de cathode.

2. Cathode pour une batterie secondaire au lithium selon la revendication 1, où Ca/Cn est dans une plage de 4,5 $\mu m^2$ à 6,44 $\mu m^2$.

3. Cathode pour une batterie secondaire au lithium selon l'une quelconque des revendications 1 et 2, où les particules d'oxyde métallique de lithium contiennent du nickel et du manganèse et ne contiennent pas de cobalt.

4. Cathode pour une batterie secondaire au lithium selon l'une quelconque des revendications 1 à 3, où un rapport molaire de nickel dans les particules d'oxyde métallique de lithium est dans une plage de 0,7 à 0,85 parmi tous les éléments autres que le lithium et l'oxygène.

5. Cathode pour une batterie secondaire au lithium selon l'une quelconque des revendications 1 à 4, où les particules d'oxyde métallique de lithium comprennent :

des premières particules d'oxyde métallique de lithium ayant chacune une forme de particule secondaire dans laquelle une pluralité de particules primaires sont agrégées ; et
des deuxièmes particules d'oxyde métallique de lithium ayant chacune une forme de seul particule.

6. Cathode pour une batterie secondaire au lithium selon la revendication 5, où un rapport d'une teneur des deuxièmes particules d'oxyde métallique de lithium par rapport à une teneur des premières particules d'oxyde métallique de lithium dans la couche de matériau actif de cathode est dans une plage de 1/3 à 3.

7. Cathode pour une batterie secondaire au lithium selon l'une quelconque des revendications 1 à 6, où les particules d'oxyde métallique de lithium comprennent :

des premières particules d'oxyde métallique de lithium ; et
des deuxièmes particules d'oxyde métallique de lithium ayant un diamètre de particule ($D_{50}$) plus petit que celui des premières particules d'oxyde métallique de lithium.

8. Cathode pour une batterie secondaire au lithium selon l'une quelconque des revendications 5 à 7, où les premières particules d'oxyde métallique de lithium ont un diamètre de particule ($D_{50}$) de 9 $\mu$m à 18 $\mu$m et les deuxièmes particules d'oxyde métallique de lithium ont un diamètre de particule ($D_{50}$) de 2 $\mu$m à 7 $\mu$m.

9. Cathode pour une batterie secondaire au lithium selon l'une quelconque des revendications 1 à 8, où la couche de matériau actif de cathode comprend en outre un matériau conducteur, et
une teneur des particules d'oxyde métallique de lithium est dans une plage de 80 % en poids à 99 % en poids par rapport à un poids total de la couche de matériau actif de cathode contenant le matériau conducteur.

10. Cathode pour une batterie secondaire au lithium selon la revendication 9, où le matériau conducteur comprend :

un matériau conducteur de type sphérique ayant un rapport d'aspect de 0,5 à 1,5 ; et
un matériau conducteur de type aiguille ayant un rapport d'aspect de 2 ou plus.

11. Cathode pour une batterie secondaire au lithium selon la revendication 10, où un diamètre de particule ($D_{50}$) du matériau conducteur de type sphérique est dans une plage de 10 nm à 60 nm, et
une longueur du matériau conducteur de type aiguille est dans une plage de 15 $\mu$m à 65 $\mu$m.

12. Cathode pour une batterie secondaire au lithium selon l'une quelconque des revendications 10 et 11, où un rapport d'une teneur du matériau conducteur de type sphérique par rapport à une teneur du matériau conducteur de type aiguille dans la couche de matériau actif de cathode est dans une plage de 0,6 à 0,8.

13. Cathode pour une batterie secondaire au lithium selon l'une quelconque des revendications 10 et 11, où un rapport d'une teneur du matériau conducteur de type sphérique par rapport à une teneur du matériau conducteur de type aiguille dans la couche de matériau actif de cathode est dans une plage de 1,8 à 3,5.

14. Cathode pour une batterie secondaire au lithium selon l'une quelconque des revendications 1 à 13, où une densité de la couche de matériau actif de cathode est dans une plage de 3,4 g/cc à 3,7 g/cc.

15. Batterie secondaire au lithium, comprenant :

la cathode pour une batterie secondaire au lithium selon l'une quelconque des revendications 1 à 14 ; et
une anode faisant face à la cathode.

# FIG. 1

100

110
105
110

# FIG. 2

160
150
I
107
106
127
126
I'

FIG. 3

**EP 4 350 805 B1**

**Patent documents cited in the description**

- KR 1020200085679